# EUROPÄISCHE PATENTANMELDUNG

(11) **EP 4 648 072 A1**
(43) Veröffentlichungstag der Anmeldung: **12.11.2025**
(21) Anmeldenummer: 25174239.1
(22) Anmeldetag: 05.05.2025
(51) Int. Cl.: H01G 2/08, H01G 2/06, H01G 2/10, H01G 4/224, H01G 4/248, H01G 4/32, H01G 4/38, H01G 4/40, H01G 2/22, H01G 4/228, H02M 7/00

(54) **ZWISCHENKREISKONDENSATOR-MODUL UND WECHSELRICHTER**

(30) Priorität: 06.05.2024 DE 102024204229
(71) Anmelder: VOLKSWAGEN AG, 38440 Wolfsburg (DE)
(72) Erfinder: Neukirchner, Peter, 38102 Braunschweig (DE); Henkenius, Carsten, 34431 Marsberg/Udorf (DE)
(74) Vertreter: Zucker, Volker

(57) **Zusammenfassung**

Die Erfindung betrifft ein Zwischenkreiskondensator-Modul (1) für einen Wechselrichter (100), wobei das Zwischenkreiskondensator-Modul (1) mindestens zwei Wickel (2) aufweist, die in Reihe geschaltet sind und einen Mittelabgriff aufweisen, wobei die Wickel (2) mit Verbindungsblechen (5, 6) verbunden sind, wobei ein erstes Verbindungsblech (5) Anschlüsse (7) für einen positiven Kontakt (DC+) und Anschlüsse (8) für Halbleiterschalter (17) des Wechselrichters (100) aufweist und das zweite Verbindungsblech (6) Anschlüsse (9) für einen negativen Kontakt (DC-) und Anschlüsse (10) für Halbleiterschalter (17) aufweist, wobei die Wickel (2) eine erste Stirnseite (3) und eine zweite Stirnseite (4) mit jeweils einem Kontakt aufweisen, wobei das Zwischenkreiskondensator-Modul (1) mindestens einen Kontaktstreifen (26) aufweist, wobei der mindestens eine Kontaktstreifen (26) die Mittelabgriffe der Wickel (2) kontaktiert, wobei der Kontaktstreifen (26) gestuft ausgebildet ist oder alternierend gestuft ausgebildet ist, sodass die erste Stirnfläche (3) oder die ersten Stirnflächen (3) des oder der Wickel (2), die mit dem ersten Verbindungsblech (5) verbunden sind, in einer anderen Ebene liegen als die ersten Stirnflächen (3) des oder der Wickel(s) (2), die mit dem zweiten Verbindungsblech (6) verbunden sind, sowie einen Wechselrichter (100).

## Beschreibung

Die Erfindung betrifft ein Zwischenkreiskondensator-Modul und einen Wechselrichter mit einem solchen Zwischenkreiskondensator-Modul.

Der Zwischenkreiskondensator im Antriebsstrang eines Elektrofahrzeugs dient zur Filterung hochfrequenter Ströme, wie sie typischerweise durch die schaltende Arbeitsweise der Halbleiterschalter vorkommen. Die Halbleiterschalter sind beispielsweise als IGBTs oder MOSFETs ausgebildet. Der Zwischenkreiskondensator liegt dabei zwischen der Traktionsbatterie und den Halbleiterschaltern, sodass die Traktionsbatterie vor diesen Belastungen geschützt ist.

Der Zwischenkreiskondensator beinhaltet im Wesentlichen einen oder mehrere Wickel, welche gegebenenfalls elektrisch parallel miteinander verbunden sind. Es ist aber auch bekannt, die Wickel in Reihe zu schalten, sodass sich ein Mittelabgriff bildet. Ein Wickel besteht aus mindestens zwei elektrisch leitfähigen, dünnen Folien, die durch eine Isolationsfolie getrennt und ineinander spiralförmig aufgewickelt sind. Elektrisch werden die Wickel jeweils über die Stirnseiten kontaktiert und über Verbindungsbleche einerseits mit der Traktionsbatterie und andererseits mit den Halbleiterschaltern verbunden. Um Kurzschlüsse zu vermeiden, sind die Verbindungsbleche elektrisch isoliert. Beispielsweise wird ein Isolationspapier zwischen den Verbindungsblechen angeordnet.

Die Strombelastung im Zwischenkreiskondensator führt zu dessen Erwärmung.

Aus der DE 10 2019 120 334 A1 ist ein Kondensatorgehäuse für elektrische Stromkreise bekannt, wobei das Kondensatorgehäuse einen geschlossenen Kragen aufweist, in den Stromschienen hineinragen. Dabei weist der Kragen paarweise Durchgangsöffnungen auf Ober- und Unterseite für den Durchgang jeweils eines Hülsenteils auf. Weiter kontaktieren jeweils ein oberes und ein unteres Hülsenteil je eine der Stromschienen, wobei diese zwischen den Stirnflächen der Hülsenteile verklemmen.

Ein Problem bei Anordnungen von Kondensatoren in Reihe ist, wenn diese über einen gemeinsamen Mittelgriff kontaktiert werden, dass die unterschiedlichen Potentiale für DC+ und DC- sehr dicht beieinander liegen, was die Gefahr von Kurzschlüssen erhöht,

Der Erfindung liegt daher das technische Problem zugrunde, ein Zwischenkreiskondensator-Modul zu schaffen, bei dem mindestens zwei Kondensatoren in Reihe geschaltet sind, bei dem die elektrische Isolation der als Wickel ausgebildeten Kapazitäten verbessert ist. Ein weiteres technisches Problem ist die Schaffung eines Wechselrichters mit einem solchen Zwischenkreiskondensator-Modul.

Die Lösung des technischen Problems ergibt sich durch ein Zwischenkreiskondensator-Modul mit den Merkmalen des Anspruchs 1 sowie einen Wechselrichter mit den Merkmalen des Anspruchs 8. Weitere vorteilhafte Ausgestaltungen der Erfindung ergeben sich aus den Unteransprüchen.

Das Zwischenkreiskondensator-Modul für einen Wechselrichter weist mindestens zwei Wickel auf, die in Reihe geschaltet sind und einen Mittelabgriff aufweisen. Die Wickel sind mit Verbindungsblechen verbunden. Ein erstes Verbindungsblech weist Anschlüsse für einen positiven Kontakt und Anschlüsse für Halbleiterschalter des Wechselrichters auf. Ein zweites Verbindungsblech weist Anschlüsse für einen negativen Kontakt und Anschlüsse für Halbleiterschalter auf. Die Wickel weisen eine erste Stirnseite und eine zweite Stirnseite mit jeweils einem Kontakt auf.

Weiter weist das Zwischenkreiskondensator-Modul mindestens einen Kontaktstreifen auf, wobei der mindestens eine Kontaktstreifen die Mittelabgriffe der Wickel kontaktiert, wobei der Kontaktstreifen gestuft ausgebildet ist oder alternierend gestuft ausgebildet ist, sodass die Stirnfläche oder die Stirnflächen des oder der Wickel(s), die mit dem ersten Verbindungsblech verbunden sind, in einer anderen Ebene liegen als die Stirnflächen des oder der Wickel(s), die mit dem zweiten Verbindungsblech verbunden sind. Dadurch wird der Abstand zwischen den Stirnflächen und damit den Kontakten der Wickel erhöht, sodass die elektrische Isolierung verbessert ist. Durch die alternierende Anordnung wird gleichzeitig der Stromfluss symmetriert. Die Stufung kann dabei rechteck- oder trapezförmig sein. Aber auch andere Arten der Stufen sind möglich. Die Wickel weisen vorzugswiese im Querschnitt einen ovalen Verlauf auf, der beispielsweise elliptisch ist. Die ovale bzw. elliptische Bauform weist Vorteile bei der Packungsdichte gegenüber kreisrunden Querschnitten auf.

Dabei kann vorgesehen sein, dass die Wickel einzeln alternierend sind. Es sind aber auch Ausführungen möglich, wo die Wickel gruppenweise alternierend angeordnet sind.

In einer Ausführungsform ist der Kontaktstreifen thermisch und elektrisch mit einer Grundplatte verbunden. Hierdurch werden Wirbelstromeffekte aufgrund der engen Stromführung der Verbindungsbleche wirksam zur Grundplatte abgeleitet, sodass die entstehende Wärmebelastung in den Wickeln reduziert wird. Dadurch wird eine Reduzierung der verfügbaren Kapazität infolge erhöhter Temperatur verhindert, sodass der Zwischenkreiskondensator in Summe kleiner dimensioniert werden kann. Die Grundplatte steht dabei vorzugsweise mit einem Kühlmittelkreislauf in thermischer Verbindung oder weist einen solchen Kühlmittelkreislauf auf.

In einer weiteren Ausführungsform ist der Kontaktstreifen Teil eines Schirmbleches, wobei ein Teil des Schirmbleches zwischen den Wickeln und einem benachbarten Verbindungsblech liegt. Hierdurch werden die Wirbelstromeffekte noch besser von den Wickeln abgeleitet, sodass der Wärmeeintrag in die Wickel weiter reduziert wird.

In einer Ausführungsform ist zwischen den Verbindungsblechen und/oder zwischen dem benachbarten Verbindungsblech und dem Schirmblech Isolationsmaterial angeordnet. Vorzugsweise ist das Isolationsmaterial Isolationspapier, sodass Kurzschlüsse vermieden werden. Das benachbarte Verbindungsblech ist dabei das Verbindungsblech (erste oder zweite), das dichter an dem Schirmblech angeordnet ist.

In einer weiteren Ausführungsform ist auf der Grundplatte mindestens ein Kühlkörper für die Wickel angeordnet. Vorzugsweise fließt eine Kühlflüssigkeit durch den Kühlkörper.

In einer weiteren Ausführungsform weist das Zwischenkreiskondensator-Modul ein Gehäuse auf, das mit einer Vergussmasse ausgefüllt ist, wobei das Gehäuse und die Grundplatte elektrisch isoliert sind. Hierdurch ist das Gehäuse berührsicher. Durch die Vergussmasse (z.B. Epoxidharz) wird die mechanische Stabilität gewährleistet.

In einer weiteren Ausführungsform ist zwischen der Unterseite des Gehäuses und der Grundplatte eine Deckplatte angeordnet, die primär für eine gute Anbindung an die Grundplatte dient und Unebenheiten der Vergussmasse ausgleicht. Die Deckplatte ist thermisch gut leitend.

In einer weiteren Ausführungsform sind die Anschlüsse für den positiven und negativen Kontakt und die Anschlüsse für die Halbleiterschalter der Verbindungsbleche auf gegenüberliegenden Seiten der Wickel vorgesehen, wobei die Verbindungsbleche und das Schirmblech einen im Wesentlichen U-förmigen Querschnitt aufweisen.

Der Wechselrichter weist ein zuvor beschriebenes Zwischenkreiskondensator-Modul auf, wobei die Halbleiterschalter des Wechselrichters mit der Grundplatte verbunden sind. Hierdurch entsteht ein sehr kompakter Wechselrichter mit sehr kurzen Strompfaden. Die Anzahl der Halbleiterschalter ist dabei abhängig von der Bauart. So sind beispielsweise Bauformen mit sechs Halbleiterschaltern möglich, um eine dreiphasige Ausgangsspannung zu erzeugen (B6-Brückenschaltung). Es sind aber auch Bauformen möglich, wo mehr als sechs Halbleiterschalter zur Anwendung kommen. So können beispielsweise zwei oder mehr Halbleiterschalter jeweils parallel geschaltet werden, um so die begrenzte Stromtragfähigkeit eines Halbleiterschalters zu kompensieren. Es sind aber auch Wechselrichter für einen 3-Level-Betrieb bekannt, wo vier Halbleiterschalter je Halbbrücke in Reihe geschaltet sind.

In einer weiteren Ausführungsform sind die Halbleiterschalter auf mindestens einem Kühlkörper angeordnet, wobei der mindestens eine Kühlkörper auf der Grundplatte angeordnet ist.

In einer weiteren Ausführungsform sind die Halbleiterschalter räumlich parallel angeordnet, sodass der Stromfluss bzw. die Strompfade symmetriert sind.

Die Erfindung wird nachfolgend anhand bevorzugter Ausführungsbeispiele näher erläutert. Die Figuren zeigen:
- Fig. 1: einen Querschnitt durch einen Wechselrichter,
- Fig. 2: eine perspektivische Darstellung eines Wechselrichters ohne Gehäuse und Vergussmasse,
- Fig. 3: eine Explosionsdarstellung eines Zwischenkreiskondensator-Moduls ohne Grundplatte,
- Fig. 4a: eine schematische Darstellung der Wickel in einer alternativen Ausführungsform,
- Fig. 4b: eine schematische Darstellung der Wickel in einer weiteren alternativen Ausführungsform und
- Fig. 5: ein Querschnitt durch ein Zwischenkreiskondensator-Modul (Stand der Technik).

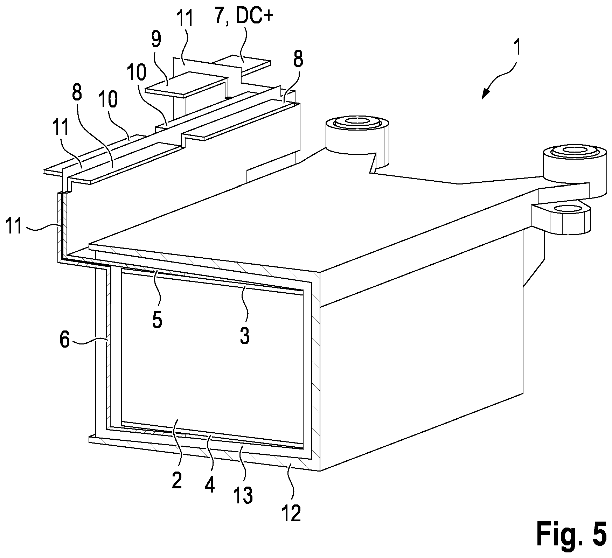

Bevor die Erfindung näher erläutert werden soll, wird zunächst anhand der Fig. 5 ein Zwischenkreiskondensator-Modul 1 gemäß dem Stand der Technik erläutert. Das Zwischenkreiskondensator-Modul 1 weist einen Zwischenkreiskondensator in Form mehrerer Wickel 2 auf. Der Wickel 2 weist eine erste (obere) Stirnseite 3 und eine zweite (untere) Stirnseite 4 auf, die jeweils Kontakte aufweisen, wobei die Mantelfläche des Wickels 2 elektrisch isoliert ist. Die erste Stirnseite 3 des Wickels 2 ist mit einem ersten Verbindungsblech 5 elektrisch verbunden. Die zweite Stirnseite 4 des Wickels 2 ist mit einem zweiten Verbindungsblech 6 elektrisch verbunden. Das erste Verbindungsblech 5 weist einen Anschluss 7 für einen positiven Kontakt DC+ und Anschlüsse 8 für Halbleiterschalter auf. Entsprechend weist das zweite Verbindungsblech 6 einen Anschluss 9 für einen negativen Kontakt DC- und Anschlüsse 10 für Halbleiterschalter auf. Zwischen dem ersten Verbindungsblech 5 und dem zweiten Verbindungsblech 6 ist Isolationsmaterial in Form von Isolationspapier 11 angeordnet. Der Wickel 2 sowie die den Wickel 2 kontaktierenden Teile des ersten Verbindungsbleches 5 und des zweiten Verbindungsbleches 6 sind in einem Gehäuse 12 angeordnet und mit einer Vergussmasse 13 vergossen.

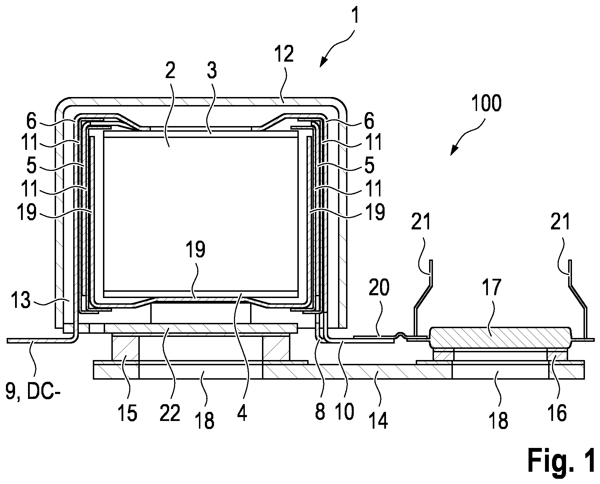

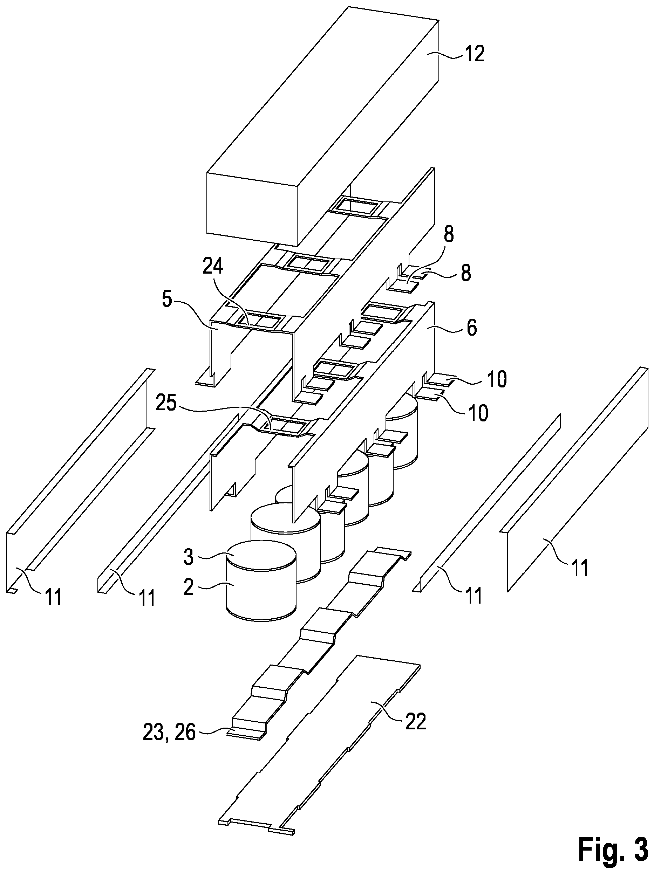

In der Fig. 1 ist ein Wechselrichter 100 mit einem Zwischenkreiskondensator-Modul 1 im Querschnitt teilweise dargestellt. Im Gegensatz zum Zwischenkreiskondensator-Modul 1 gemäß Fig. 5, das schon mit einem oder mehr Wickeln ausgeführt sein kann, weist das Zwischenkreiskondensator-Modul 1 mindestens zwei Wickel 2 auf. Der Wechselrichter 100 weist eine Grundplatte 14 auf, auf dem mindestens ein Kühlkörper 15 für die Wickel 2 und mindestens ein Kühlkörper 16 für Halbleiterschalter 17 angeordnet sind. In der Grundplatte 14 sind Zuführungen 18 für eine Flüssigkeitskühlung der Kühlkörper 15, 16 vorgesehen. Das Zwischenkreiskondensator-Modul 1 weist ein Gehäuse 12 auf, das mit einer Vergussmasse 13 vergossen ist. Das erste Verbindungsblech 5 und das zweite Verbindungsblech 6 sind zu beiden Seiten der Wickel 2 angeordnet und nahezu vollständig im Gehäuse 12 angeordnet und vergossen. Dabei ist der Anschluss 9 für den negativen Kontakt DC- nicht vergossen. Der entsprechende Anschluss 7 für den positiven Kontakt DC+ ist verdeckt. Zwischen dem ersten Verbindungsblech 5 und dem zweiten Verbindungsblech 6 sind Isolationspapiere 11 angeordnet. Weiter ist ein Schirmblech 19 vorgesehen, das zwischen den Mantelflächen der Wickel 2 und dem ersten Verbindungsblech 5 angeordnet ist. Das Schirmblech 19 kontaktiert dabei alle zweiten Stirnseiten 4 der Wickel 2, wobei das Schirmblech 19 elektrisch und thermisch mit der Grundplatte 14 verbunden ist. Die erste Stirnseite 3 des im Querschnitt erkennbaren Wickel 2 wird vom zweiten Verbindungsblech 6 kontaktiert. Zwischen dem Schirmblech 19 und dem ersten Verbindungsblech 5 (als benachbartes Verbindungsblech) ist ebenfalls Isolationspapier 11 angeordnet. Die Anschlüsse 8, 10 für die Halbleiterschalter 17 sind zur anderen Seite herausgeführt und über Kontaktteile 20 mit den Halbleiterschaltern 17 elektrisch verbunden. Weiter dargestellt sind Gate-Kontakte 21 der Halbleiterschalter 17. Schließlich weist das Zwischenkreiskondensator-Modul 1 noch eine Deckplatte 22 auf, die zwischen dem Gehäuse 12 bzw. der Vergussmasse 13 und dem Kühlkörper 15 für die Wickel 2 angeordnet ist. Dabei bildet die Basis des im Querschnitt im Wesentlichen U-förmigen Schirmblechs 19 einen Kontaktstreifen 26, was später noch anhand von Fig. 3 besser zu erkennen ist. Der Kontaktstreifen 26 ist dabei alternierend gestuft ausgebildet, sodass die ersten (oberen) Stirnseiten 3 der Wickel2, die mit dem ersten Verbindungsblech 5 verbunden sind, in einer anderen Ebene liegen als die ersten Stirnseiten 3 der Wickel 2, die mit dem zweiten Verbindungsblech 6 verbunden sind.

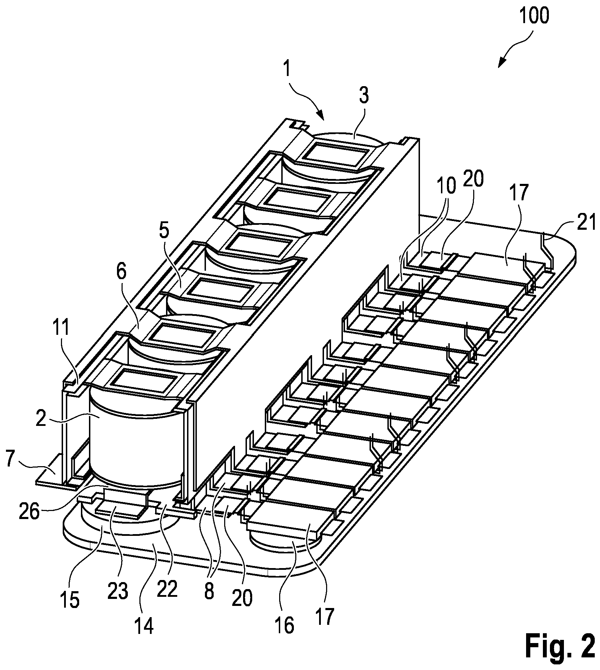

In der Fig. 2 ist der Wechselrichter 100 perspektivisch dargestellt, wobei Gehäuse 12 und Vergussmasse 13 fehlen. Im Gegensatz zu Fig. 1 weist der Wechselrichter 100 kein Schirmblech 19 auf, d.h. die beiden Schenkel, die zwischen den Mantelflächen der Wickel 2 und den Verbindungsblechen 5, 6 des Schirmbleches in Fig. 1 dargestellt sind, fehlen in Fig. 2 und Fig. 3. Diese können aber auch, wie in Fig. 1 dargestellt, vorhanden sein. Das Zwischenkreiskondensator-Modul 1 weist sechs Wickel 2 auf, deren zweiten Stirnseiten 4 alle durch den Kontaktstreifen 26 kontaktiert werden, wobei über eine Kontaktzunge 23 der Kontaktstreifen 26 elektrisch und thermisch mit dem Kühlkörper 15 und damit mit der Grundplatte 14 verbunden ist. Die sechs Wickel 2 sind nebeneinander in Reihe angeordnet, wobei die ersten Stirnseiten 3 der Wickel 2 alternierend mit dem ersten Verbindungsblech 5 und dem zweiten Verbindungsblech 6 elektrisch verbunden sind. Der Kontaktstreifen 26 stellt dabei einen Mittelabgriff aller sechs Wickel 2 dar. Weiter dargestellt sind zwölf Halbleiterschalter 17, die parallel angeordnet sind. Die Halbleiterschalter 17 sind dabei auf dem mindestens einen Kühlkörper 16 angeordnet. Da die Anzahl der Halbleiterschalter 17 doppelt so groß ist wie die Anzahl der Wickel 2, weisen das erste Verbindungsblech 5 und das zweite Verbindungsblech 6 jeweils zwei dicht benachbarte Anschlüsse 8, 10 auf, um jeweils zwei parallele Halbleiterschalter 17 zu kontaktieren, die auch elektrisch parallel geschaltet sind. Dabei liegen die ersten Stirnseiten 3 der Wickel 2, die mit dem zweiten Verbindungsblech 6 verbunden sind, höher als die ersten Stirnseiten 3 der Wickel 2, die mit dem ersten Verbindungsblech 5 verbunden sind, sodass die elektrische Isolierung zwischen diesen verbessert ist.

In der Fig. 3 ist das Zwischenkreiskondensator-Modul 1 in einer Explosionsdarstellung gezeigt. Dabei erkennt man, dass das erste Verbindungsblech 5 und das zweite Verbindungsblech 6 im Wesentlichen einen U-förmigen Querschnitt aufweisen, wobei die jeweiligen Seitenwände massiv sind. Die Basis von dem ersten Verbindungsblech 5 und dem zweiten Verbindungsblech 6 sind hingegen derart strukturiert, um Kontaktbereiche 24 bzw. 25 auszubilden, um die ersten Stirnseiten 3 der zugeordneten Wickel 2 zu kontaktieren. Dabei werden die beiden Verbindungsbleche 5, 6 von oben über die Wickel 2 gestülpt. Der Kontaktstreifen 26 ist trapezförmig, alternierend gestuft ausgebildet, sodass die Stirnseiten 3, 4 der Wickel 2, die mit dem ersten Verbindungsblech 5 verbunden sind, jeweils tiefer liegen als die Stirnseiten 3, 4 der Wickel 2, die mit dem zweiten Verbindungsblech 6 verbunden sind.

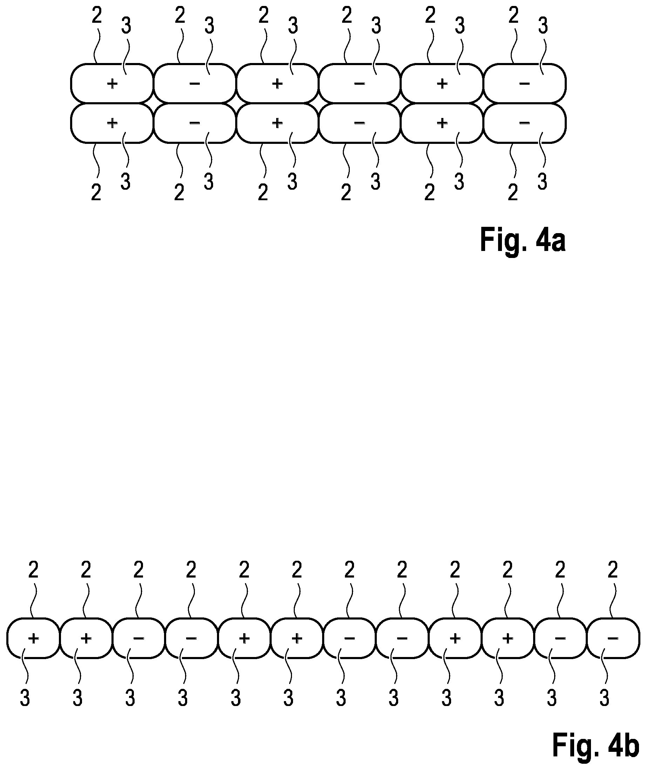

In der Fig. 4a ist schematisch eine alternative Ausführungsform dargestellt, wo z.B. zwölf Wickel 2 vorgesehen sind. Dabei sind die Wickel 2 nebeneinander in zwei Reihen angeordnet, wobei die jeweils zwei parallelen Wickel 2 unterschiedlicher Reihen mit dem gleichen Verbindungsblech 5, 6 verbunden sind, wobei die mit + gekennzeichneten Wickel 2 mit dem ersten Verbindungsblech 5 und die mit - gekennzeichneten Wickel 2 mit dem zweiten Verbindungsblech 6 kontaktiert werden. Im Querschnitt sind die Wickel 2 vorzugsweise oval, sodass die Packungsdichte erhöht wird.

In der Fig. 4b ist eine weitere alternative Ausführungsform dargestellt, wobei wieder alle Wickel 2 in einer Reihe angeordnet sind. Dabei alterniert die Kontaktierung paarweise. Bei den in Fig. 4a und Fig. 4b dargestellten Wickel 2 sind auch die Stirnseiten 3,4 der mit + gekennzeichneten Wickel 2 in einer anderen Ebene als die der mit - gekennzeichneten Wickel 2.

Insgesamt lassen sich die Vorteile des Zwischenkreiskondensator-Moduls 1 bzw. des Wechselrichters 100 wie folgt zusammenfassen.

Durch die Anordnung der Stirnseiten 3, 4 der Wickel 2, die mit unterschiedlichen Verbindungsblechen 5, 6 verbunden sind, in unterschiedlichen Ebenen wird die elektrische Isolation zwischen DC+ und DC- verbessert.

Die parallele Anordnung der Halbleiterschalter 17 bietet gegenüber einer seriellen Anordnung eine besonders enge Gestaltung der Kommutierungsmasche und damit eine Reduktion der elektromagnetischen Störemissionen. Zudem ist die Länge der Stromführung durch die Halbleiterschalter 17 auf ein Minimum verkürzt, sodass Stromverdrängungseffekte innerhalb der Kühlkörper weniger Verlustwärme erzeugen.

Durch die wechselweise gedrehte Anordnung der Wickel 2 innerhalb des Zwischenkreiskondensator-Moduls 1 kann der Mittelabgriff mit dem Kühlkörper verbunden werden. Mit der Isolation der Grundplatte 14 bzw. dem Kühlkörper 15 gegenüber dem Gehäuse 12, welches als eine schutzgeerdete Hülle des gesamten Aufbaus wirkt, werden kapazitive Ableitströme, welche durch enge Anbindung der Halbleiterschalter an den Kühlkörper entstehen, direkt zum Zwischenkreiskondensator zurückgeführt, was im Stand der Technik Y-Kondensatoren tun. Diese können daher entfallen oder können kleiner dimensioniert werden.

Ähnlich wie bei den Halbleiterschaltern treten durch enge Stromführung der Verbindungsbleche an die Wickel Wirbelstromeffekte auf, die durch das Schirmblech reduziert werden.

### Bezugszeichenliste

- 1: Zwischenkreiskondensator-Modul
- 2: Wickel
- 3: erste Stirnseite
- 4: zweite Stirnseite
- 5: erstes Verbindungsblech
- 6: zweites Verbindungsblech
- 7, 8, 9, 10: Anschlüsse
- 11: Isolationspapier
- 12: Gehäuse
- 13: Vergussmasse
- 14: Grundplatte
- 15, 16: Kühlkörper
- 17: Halbleiterschalter
- 18: Zuführung
- 19: Schirmblech
- 20: Kontaktteil
- 21: Gate-Kontakt
- 22: Deckplatte
- 23: Kontaktzunge
- 24, 25: Kontaktbereiche
- 26: Kontaktstreifen
- 100: Wechselrichter

## Patentansprüche

1. Zwischenkreiskondensator-Modul (1) für einen Wechselrichter (100), wobei das Zwischenkreiskondensator-Modul (1) mindestens zwei Wickel (2) aufweist, die in Reihe geschaltet sind und einen Mittelabgriff aufweisen, wobei die Wickel (2) mit Verbindungsblechen (5, 6) verbunden sind, wobei ein erstes Verbindungsblech (5) Anschlüsse (7) für einen positiven Kontakt (DC+) und Anschlüsse (8) für Halbleiterschalter (17) des Wechselrichters (100) aufweist und das zweite Verbindungsblech (6) Anschlüsse (9) für einen negativen Kontakt (DC-) und Anschlüsse (10) für Halbleiterschalter (17) aufweist, wobei die Wickel (2) eine erste Stirnseite (3) und eine zweite Stirnseite (4) mit jeweils einem Kontakt aufweisen,
**dadurch gekennzeichnet, dass**
das Zwischenkreiskondensator-Modul (1) mindestens einen Kontaktstreifen (26) aufweist, wobei der mindestens eine Kontaktstreifen (26) die Mittelabgriffe der Wickel (2) kontaktiert, wobei der Kontaktstreifen (26) gestuft ausgebildet ist oder alternierend gestuft ausgebildet ist, sodass die erste Stirnfläche (3) oder die ersten Stirnflächen (3) des oder der Wickel (2), die mit dem ersten Verbindungsblech (5) verbunden sind, in einer anderen Ebene liegen als die ersten Stirnflächen (3) des oder der Wickel (2), die mit dem zweiten Verbindungsblech (6) verbunden sind.

2. Zwischenkreiskondensator-Modul nach Anspruch 1, **dadurch gekennzeichnet, dass** der Kontaktstreifen (26) thermisch und elektrisch mit einer Grundplatte (14) verbunden ist.

3. Zwischenkreiskondensator-Modul nach Anspruch 2, **dadurch gekennzeichnet, dass** der Kontaktstreifen (26) Teil eines Schirmblechs (19) ist, wobei ein Teil des Schirmblechs (19) zwischen den Wickel (2) und einem benachbarten Verbindungsblech (5,6 ) liegt.

4. Zwischenkreiskondensator-Modul nach einem der vorangegangenen Ansprüche, **dadurch gekennzeichnet, dass** zwischen den Verbindungsblechen (5, 6) und/oder zwischen dem benachbarten Verbindungsblech (5, 6) und dem Schirmblech (19) Isolationsmaterial angeordnet ist.

5. Zwischenkreiskondensator-Modul nach einem der vorangegangenen Ansprüche, **dadurch gekennzeichnet, dass** auf der Grundplatte (14) mindestens ein Kühlkörper (15) für die Wickel (2) angeordnet ist.

6. Zwischenkreiskondensator-Modul nach einem der vorangegangenen Ansprüche, **dadurch gekennzeichnet, dass** das Zwischenkreiskondensator-Modul (1) ein Gehäuse (12) aufweist, das mit einer Vergussmasse (13) ausgefüllt ist, wobei das Gehäuse (12) und die Grundplatte (14) elektrisch isoliert sind.

7. Zwischenkreiskondensator-Modul nach einem der vorangegangenen Ansprüche, **dadurch gekennzeichnet, dass** die Anschlüsse (7, 9) für die positiven und negativen Kontakte (DC+, DC-) und die Anschlüsse (8, 10) für die Halbleiterschalter (17) der Verbindungsbleche (5, 6) auf gegenüberliegenden Seiten der Wickel (2) vorgesehen sind, wobei die Verbindungsbleche (5, 6) einen im Wesentlichen U-förmigen Querschnitt aufweisen.

8. Wechselrichter (100), **dadurch gekennzeichnet, dass** der Wechselrichter (100) ein Zwischenkreiskondensator-Modul (1) nach einem der vorangegangenen Ansprüche 1 bis 7 enthält, wobei die Halbleiterschalter (17) des Wechselrichters (100) mit der Grundplatte (14) verbunden sind.

9. Wechselrichter nach Anspruch 8, **dadurch gekennzeichnet, dass** die Halbleiterschalter (17) auf mindestens einem Kühlkörper (16) angeordnet sind, wobei der mindestens eine Kühlkörper (16) auf der Grundplatte (14) angeordnet ist.

10. Wechselrichter nach einem der Ansprüche 8 oder 9, **dadurch gekennzeichnet, dass** die Halbleiterschalter (17) parallel angeordnet sind.
